(19) Europäisches Patentamt
European Patent Office
Office européen des brevets

(11) **EP 2 743 738 B1**

(12) **FASCICULE DE BREVET EUROPEEN**

(45) Date de publication et mention
de la délivrance du brevet:
**24.03.2021 Bulletin 2021/12**

(51) Int Cl.:
***G01V 99/00*** *(2009.01)*

(21) Numéro de dépôt: **13306492.3**

(22) Date de dépôt: **31.10.2013**

(54) **Procédé d'exploitation d'un bassin sedimentaire au moyen d'une simulation stratigraphique couplé avec un modèle de production et de dégradation de matière organique**

Verfahren zur Betrieb eines Sedimentbeckens unter Verwendung einer stratigrafischen Simulation mit einem Produktions- und Degradierungsmodell organischen Materials.

Method of operating a sedimentary basin using a stratigraphic simulation coupled with a production and degradation model of organic material.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2012 FR 1203389**

(43) Date de publication de la demande:
**18.06.2014 Bulletin 2014/25**

(73) Titulaire: **IFP Energies nouvelles**
**92500 Rueil-Malmaison (FR)**

(72) Inventeurs:
• **Granjeon, Didier**
**92500 Rueil-Malmaison (FR)**
• **CHAUVEAU, Benoit**
**75013 PARIS (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**US-A1- 2002 013 687      US-A1- 2010 175 886**
**US-A1- 2010 228 485      US-A1- 2011 264 430**

## Description

L'invention concerne le domaine de l'industrie pétrolière, et notamment l'exploration pétrolière par l'étude de bassin sédimentaire.

Les grandes tendances actuelles en exploration pétrolière sont :

- de s'orienter vers des zones de plus en plus complexes (piedmonts des chaînes de montagnes, zones marines ultra-profondes, ...),
- d'optimiser la récupération des gisements déjà découverts et
- de rechercher de nouvelles ressources (gaz et huile de schistes ...).

Afin de répondre à ces trois objectifs, il est important de caractériser au mieux la distribution des sédiments au sein d'un bassin sédimentaire, et en particulier la distribution et la qualité de la matière organique au sein de ces sédiments, contrôlées par les processus de dépôt, de dégradation et/ou de préservation de cette matière organique. Une bonne caractérisation des couches sédimentaires riches en matière organique passe ainsi par une bonne compréhension de la stratigraphie du bassin, c'est-à-dire de la géométrie des couches sédimentaires, de la répartition des sédiments fins et grossiers au sein de ces couches, et de l'impact qu'aura la dynamique de ce remplissage sur la distribution finale et la qualité de la matière organique.

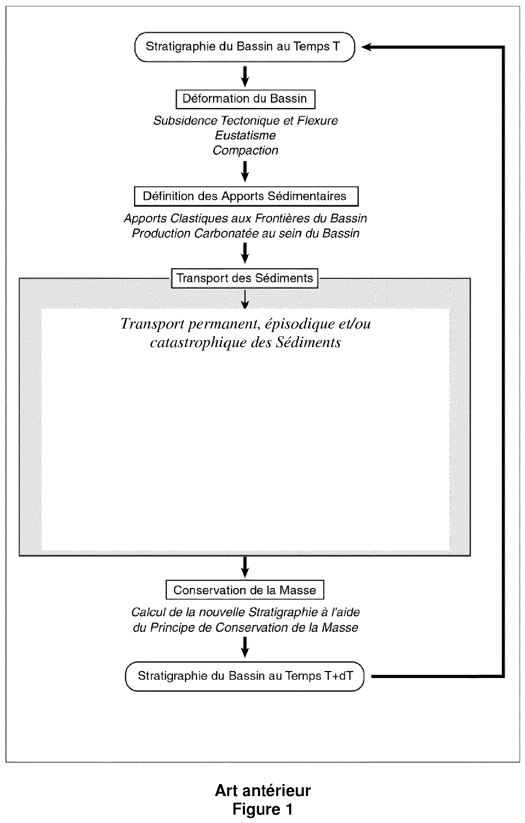

La modélisation stratigraphique a pour objectif de simuler l'évolution d'un bassin sédimentaire au cours des temps géologiques, comme décrit dans le document US 2002/013687 A1, afin de quantifier la géométrie des couches sédimentaires, la granulométrie des sédiments, la profondeur d'eau au moment du dépôt.... Les travaux pionniers de Harbaugh et Bonham-Carter (1970) ont tracé les contours de cette modélisation numérique orientée processus. Depuis, plusieurs modèles stratigraphiques 3D ont été développés : par exemple SEDSIM ™ (CSIRO, Australie), et DIONISOS ™ (IFP Energies nouvelles, France). Le domaine d'application (échelles de temps et d'espace) peut être différent d'un modèle à l'autre. Ainsi, seul DIONISOS permet de modéliser tous les types d'environnement de dépôt sur des échelles de plusieurs millions d'années. La figure 1 représente les étapes itératives d'une simulation stratigraphique telles que décrites dans la demande de brevet FR 2 849 211 (US 7,043,367). Ces différents modèles reposent cependant sur la même méthodologie et prennent généralement en compte trois grands processus, représentés en figure 1 :

- la création (ou la suppression), d'espace disponible à la sédimentation par les mouvements tectoniques, eustatiques et flexuraux,
- l'apport en sédiment dans le bassin, soit par les frontières, soit par l'intermédiaire d'une production ou d'une précipitation in situ, et
- le transport de ces sédiments dans l'espace disponible créé, ces transports peuvent être le transport permanent des sédiments, le transport épisodique des sédiments et/ou le transport catastrophique de ces sédiments.

Une nouvelle stratigraphie est ensuite déterminée à l'aide du principe de conservation de la masse.

Ces modèles stratigraphiques sont des outils utilisés pour mieux comprendre l'architecture sédimentaire d'un bassin. Pour l'industrie pétrolière, il s'agit *in fine* de mieux contraindre les zones de dépôt préférentielles de la matière organique ou les pièges structuraux dans lesquels seraient stockés du pétrole et/ou du gaz. Cependant, aucun de ces modèles stratigraphiques ne disposent d'un module prenant en compte la production, le transport et la dégradation de la matière organique, dans le but d'estimer la distribution de la matière organique lors du remplissage du bassin sédimentaire.

Au début des années 1990, des outils de prédiction de la teneur en matière organique dans les sédiments ont été développés (par exemple Carbolog, Carpentier et al, 1991), mais les estimations ne se faisaient qu'au niveau des puits en se basant uniquement sur des diagraphies. Ces méthodes sont ainsi inapplicables à l'échelle d'un bassin sédimentaire, et ne prennent pas en compte la dynamique réelle du bassin (notamment le transport de la matière organique), mais uniquement son état final vu par les diagraphies.

La nécessité de prendre en compte la cinématique de remplissage d'un bassin pour une meilleure évaluation de la distribution de la matière organique a été mise en avant par de nombreux travaux. Carpentier et al (1993) ont proposé un modèle de remplissage (SIMSALT) du bassin de Mulhouse en associant des dépôts d'évaporites avec une sédimentation de matière organique, mais ce modèle ne prend en compte que la production de matière organique et la précipitation d'évaporite, en négligeant les processus de transport et de dégradation.

En outre, des modèles indépendants de production et de dégradation de la matière organique ont été développés. Par exemple, le modèle Of-Mod ™ (SINTEF, Norvège) permet de prédire la distribution et la qualité de la matière organique dans des séquences stratigraphiques. Ce modèle est notamment décrit dans le document : Mann, U. and Zweigel, J., (2008). Modelling source rock distribution and quality variations: The OF-Mod approach. In: Analogue and Numerical Forward Modelling of Sedimentary Systems; from Understanding to Prédiction (P.L. de Boer, G. Postma, C.J. van der Zwan, P.M. Burgess and P. Kukla, eds.). Special Publication 40 of the International Association of Sedimentologists, pp. 239-274. Ce modèle est utilisé par l'industrie pétrolière pour estimer la distribution de la matière organique dans les bassins sédimentaires. Il nécessite un modèle numérique 3D du bassin sédimentaire étudié, fourni par un modèle stratigraphique ou un géomodeleur, et quantifie la teneur en carbone organique dans les sédiments en simulant la production et la dégradation de la matière organique en domaine marin. Ce modèle néglige cependant les processus de transport et les interactions entre production, transport et dégradation : en effet, avec ce modèle, on considère que la matière organique marine se dépose à la verticale de sa zone de production (c'est-à-dire sans transport), et que la matière organique terrestre est « collée » aux sédiments clastiques terrigènes, dont la distribution doit être fournie en entrée du modèle Of-Mod ™.

L'invention a pour objet un procédé d'exploitation d'un bassin sédimentaire, dans lequel on détermine la distribution et la qualité de la matière organique dans le bassin sédimentaire à l'aide d'une modélisation stratigraphique représentant l'évolution du bassin sédimentaire. Le procédé repose sur le couplage d'un modèle stratigraphique et d'un modèle de production, transport et dégradation de la matière organique. L'invention permet une caractérisation de la géométrie et de la nature des couches sédimentaires riches en matière organique (roches mères, schiste à gaz et à huile, ...) composant un bassin sédimentaire en particulier pour l'exploration pétrolière lors de l'étude de zones frontières, de l'évaluation de nouveaux champs, de la caractérisation du potentiel pétrolier et de la recherche de nouvelles ressources (gaz de schistes, ...).

**Le procédé selon l'invention**

L'invention concerne un procédé d'exploitation d'un bassin sédimentaire, dans lequel on construit une image quantifiant un potentiel en hydrocarbures dudit bassin sédimentaire. Pour ce procédé, on réalise les étapes suivantes :

a) on décompose ledit bassin sédimentaire en couches géologiques, chaque couche géologique correspondant à un dépôt de sédiments pendant une durée donnée ;
b) on détermine la composition desdites couches géologiques au moyen d'un couplage entre une simulation stratigraphique et un modèle de production et de dégradation de matière organique ;
c) on quantifie le potentiel en hydrocarbures desdites couches géologiques dudit bassin sédimentaire à partir de ladite composition ; et
d) on exploite ledit bassin sédimentaire en fonction de ladite quantification.

Selon l'invention, on détermine ladite composition desdites couches géologiques au moyen d'une simulation stratigraphique itérative, du passé jusqu'à un temps plus récent, au sein de chaque couche géologique, au moyen d'un modèle stratigraphique et d'un modèle de production et de dégradation de matière organique, en mettant en œuvre des étapes suivantes :

i) on détermine la production de ladite matière organique au sein de ladite couche géologique au moyen dudit modèle de production et de dégradation de matière organique ;
ii) on modélise le transport des sédiments et de ladite matière organique produite au moyen dudit modèle stratigraphique ;
iii) on détermine la dégradation de ladite matière organique lors dudit transport au moyen dudit modèle de production et de dégradation de matière organique ;
iv) on détermine la stratigraphie dudit bassin en tenant compte de la conservation des masses au moyen dudit transport des sédiments et de la dégradation de la matière organique ; et
v) on détermine la dégradation de la matière organique au sein de ladite stratigraphie au moyen dudit modèle de production et de dégradation de matière organique.

Avantageusement, ladite simulation stratigraphique, les sédiments et ladite matière organique sont décrits à l'aide d'un nombre fini de classes de sédiments et de matière organique.

Selon un mode de réalisation de l'invention, on quantifie ledit potentiel en hydrocarbures en déterminant une teneur en carbone organique (TOC) contenue dans chaque couche géologique et/ou en déterminant des indices d'hydrogène (IH) et/ou d'oxygène (IO) et/ou en déterminant la minéralogie des sédiments au sein de chaque couche géologique.

De manière avantageuse, on détermine la production de ladite matière organique en prenant en compte une estimation de la distribution des nutriments par ledit modèle stratigraphique.

De préférence, on détermine la production de matière organique dans au moins un domaine marin ou lacustre

$$PP_k(z) = PP_{0,k} \left( \frac{z}{z_0} \right)^{-nk}$$

à partir d'une équation du type : si $z > z_0$, sinon $PP_k(z) = PP_{0,k}$ avec $PP_k$ le flux de sédiment de classe k arrivant sur un fond marin, z la profondeur dudit fond marin ou lacustre, $z_0$ la profondeur de la zone photique du milieu aquatique, $n_k$ une constante spécifique à la classe k de sédiment organique et $PP_0$ le taux de production primaire défini par $PP_{0,k} = a_{1,k} Q_{nutriment}^{b1,k}$ avec $Q_{nutriment}$ l'apport en nutriment et $a_{1,k}$ et $b_{1,k}$ des constantes spécifiques à la classe de sédiments k.

En outre, on peut déterminer la production de matière organique dans les tourbières à partir d'une équation

$$PP_k(z) = PP_{0,k} \left( \frac{z}{z_0} \right)^{-nk}$$

du type : si $z > z_0$, sinon $PP_k(z) = PP_{0,k}$ avec $PP_k$ le flux de sédiment de classe k arrivant sur le fond de la tourbière, z la profondeur de la tourbière, $z_0$ la profondeur de la zone photique du milieu aquatique, $n_k$ une constante spécifique au sédiment organique de classe k et $PP_0$ le taux de production primaire défini par

$PP_{0,k} = a_{2,k} Q_{eau}^{b2,k}$ avec $Q_{eau}$ le flux d'eau et $a_{2,k}$ et $b_{2,k}$ des constantes spécifiques à la classe de sédiment k.

Selon l'invention, on détermine la dégradation de ladite matière organique par détermination d'un taux de préservation de la matière organique au moyen des étapes suivantes :

(1) on détermine un facteur d'oxygénation de l'eau ;
(2) on détermine un taux de préservation de matière organique en zone oxydante et un taux de préservation de matière organique en zone réductrice au moyen dudit facteur d'oxygénation de l'eau ;
(3) on détermine ledit taux de préservation de la matière organique au moyen desdits taux de préservation de matière organique en zone oxydante et en zone réductrice.

Avantageusement, on détermine ledit facteur d'oxygénation de l'eau $Ox$ au moyen d'une formule du type : $Ox = Ox_{topo} \cdot Ox_{conso}$ avec $Ox_{topo}$ le facteur d'oxygénation topographique et $Ox_{conso}$ le facteur de consommation d'oxygène,

$$Ox_{topo} = a_3 \left( \frac{A^{\frac{1}{2}}}{H_{max}} \right)^{b_3}$$

$Ox_{topo}$ étant défini par une relation du type : avec A la surface du milieu aquatique, $H_{max}$ la profondeur maximal dudit milieu aquatique, $a_3$ et $b_3$ des constantes spécifiques et $Ox_{conso}$ étant défini par une relation

$$Ox_{conso} = \left( \frac{PP_{min}}{PP} \right)^{b4}$$

du type : $Ox_{conso} = 1$ si $PP < PP_{min}$ sinon avec PP la somme des taux de production $PP_k$ de chaque classe k de sédiment organique, $PP_{min}$ le seuil de production primaire totale et $b_4$ une constante.

On peut déterminer ledit taux de préservation de matière organique $BE_{Ox,k}$ en zone oxydante par une formule du type : $BE_{Ox,k} = (a_{Ox,k} + b_{Ox,k} \cdot Z_{Ox} \cdot v_s)^{nOx,k}$ avec $v_s$ la vitesse de sédimentation, $a_{Ox,k}$, $b_{Ox,k}$ et $n_{Ox,k}$ des constantes, $Z_{Ox}$ la distance de pénétration de l'oxygène définie par une formule du type : $Z_{Ox} = Z_0 \cdot Ox$ avec $Z_0$ la profondeur maximale du milieu aquatique.

De plus, on peut déterminer ledit taux de préservation de matière organique $BE_{Re\,d,k}$ en zone réductrice par une formule du type : $BE_{Re\,d,k} = (a_{Re\,d,k} + b_{Re\,d,k} \cdot v_s)^{nRr\,ed,k}$ avec $v_s$ la vitesse de sédimentation, $a_{Re\,d,k}$, $b_{Re\,d,k}$ et $n_{Re\,d,k}$ des constantes.

Avantageusement, on détermine le taux de préservation de la matière organique $BE_k$ au moyen d'une relation du type : $BE_k = BE_{Ox,k} \cdot BE_{Re\,d,k}$.

De préférence, ledit indice d'hydrogène est déterminé au moyen d'une formule du type

$$IH = \sum_{k=1}^{N} c_k \cdot IH_k \cdot BE_{Ox,k}^{i1,k} \cdot BE_{Re\,d,k}^{i2,k}$$

avec IH l'indice d'hydrogène final, N le nombre de classes de sédiments et de matière organiques, $c_k$ la fraction massique de matière organique k, $IH_k$ l'indice d'hydrogène initial de la classe de sédiment k, $BE_{ox,k}$ et $BE_{\mathrm{Re}\,d,k}$ les taux de préservation de la matière organique k, et i1 et i2 des constantes spécifiques à chaque classe k de sédiment.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé tel que décrit ci-dessus, lorsque ledit programme est exécuté sur un ordinateur.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1, déjà décrite, illustre les étapes itératives d'une simulation stratigraphique selon l'art antérieur.
La figure 2 illustre les étapes itératives d'une simulation stratigraphique couplée avec un modèle de production, transport et dégradation de matière organique selon un mode de réalisation de l'invention.
La figure 3 représente la division des lacs et domaines marins.
Les figures 4 à 6 représentent des résultats de simulation pour un exemple d'application.

**Description détaillée de l'invention**

L'invention concerne un procédé d'exploitation d'un bassin sédimentaire, dans lequel on construit une image quantifiant un potentiel en hydrocarbures au moyen d'un modèle stratigraphique couplé à un modèle de production, transport et dégradation de matière organique.

On rappelle qu'un modèle stratigraphique est un modèle numérique qui a pour objectif de simuler l'évolution d'un bassin sédimentaire au cours des temps géologiques afin de quantifier la géométrie des couches sédimentaires, la granulométrie des sédiments, la profondeur d'eau au moment du dépôt ... Un tel modèle prend généralement en compte trois grands processus : la création (ou la suppression), d'espace disponible à la sédimentation par les mouvements tectoniques, eustatiques et flexuraux, l'apport en sédiment dans le bassin, soit par les frontières, soit par l'intermédiaire d'une production ou d'une précipitation in situ, et le transport de ces sédiments dans l'espace disponible créé. Une nouvelle stratigraphie est ensuite déterminée à l'aide du principe de conservation de la masse. Les modèles SEDSIM ™ (CSIRO, Australie) et DIONISOS ™ (IFP Energies nouvelles, France) sont des exemples de modèles stratigraphiques. Selon l'invention, le modèle stratigraphique permet une étude sur des échelles de temps et d'espace importantes (durée de l'ordre de quelques milliers d'années à quelques centaines de millions d'années, distance horizontale de l'ordre de quelques dizaines à quelques centaines de kilomètres).

On appelle modèle de production, de transport et de dégradation de matière organique, un modèle numérique permettant de déterminer la matière organique produite, déplacée et dégradée lors de la formation des couches géologiques. En domaine émergé, la matière organique est issue des plantes (débris de bois et de feuilles, algues dans les lacs, ...). En domaine marin, la matière organique provient du plancton, recyclé par les animaux marins en pelote fécale, mais aussi des végétaux marins (algues), ....Les bactéries peuvent aussi y contribuer sous la forme de tapis microbien. Ce ne sont que des exemples. La matière organique est issue de tout organisme vivant, à l'opposé de la matière minérale. Le modèle Of-Mod ™ (SINTEF, Norvège) est un exemple de modèle de production et dégradation de matière organique. Dans la suite de la description, le modèle de production, de transport et de dégradation de matière organique est simplement noté modèle organique.

Notations

Au cours de la description, les notations suivantes sont utilisées :

- TOC : teneur en carbone organique.
- IH : indice d'hydrogène.
- OH : indice d'oxygène.
- k : numéro de la classe de sédiment (ici, le terme sédiment englobe la matière organique).
- N : nombre de classes de sédiment (ici, le terme sédiment englobe la matière organique).
- $Ox$ : facteur d'oxygénation compris entre 0 et 1 avec :

  ◦ $Ox_{topo}$ : facteur d'oxygénation topographique, et
  ◦ $Ox_{conso}$ : facteur de consommation d'oxygène.

- $A$ : surface du lac ou du domaine marin étudié.
- $H_{max}$ : profondeur maximale du lac ou du domaine marin étudié.
- $PP$ : taux de production avec :

  - $PP_k$ : taux (flux) de production du sédiment de classe k,
  - $PP_{min}$ : seuil de production primaire totale,
  - $PP_0$ : taux de production primaire du sédiment de classe k.

- $Q_{nutriment}$ : apport de nutriment (flux).
- $Q_{eau}$ : flux d'eau.
- $z$ : profondeur du fond marin ou lacustre.
- $z_0$ : profondeur de la zone photique.
- $n_k$ : constante spécifique à la classe k de sédiment organique, cette constante est de l'ordre de 0,6 à 1,6.
- $Z_0$ : profondeur maximale de la zone oxydante.
- $Z_{Ox}$ : profondeur locale de la zone oxydante, correspondant à la distance de pénétration de l'oxygène, et dépendant du facteur local d'oxygénation Ox.
- $Z_{Re\,d}$ : profondeur de la zone réductrice.
- $BE_k$ : taux de préservation (de l'anglais "Burial Efficiency") du sédiment de classe k, c'est la quantité de matière organique qui est préservée dans les sédiments avec :

  - $BE_{Ox,k}$ : taux de préservation de la zone oxydante,
  - $BE_{Re\,d,k}$ : taux de préservation de la zone réductrice.

- $v_s$ : vitesse de sédimentation.
- $a,b,c,i,n$ : paramètres de calibration pouvant être spécifiques à la classe k de sédiment, ces constantes sont déterminées à partir de base de données ou à partir de mesures expérimentales.

Le procédé selon l'invention permet de construire un modèle numérique quantifiant la richesse en matière organique (notamment caractérisée par le TOC, ou Teneur en Carbone Organique), ainsi que son origine (notamment caractérisé par ses indices d'hydrogène, IH, et d'oxygène, IO, ainsi que sa minéralogie), au sein des couches d'un bassin sédimentaire.

Pour atteindre ce but, on réalise les étapes suivantes :

1) déformation du bassin
2) définition des apports sédimentaires
3) transport des sédiments prenant en compte la matière organique
4) conservation de la masse
5) quantification d'un potentiel en hydrocarbures
6) exploitation du bassin sédimentaire

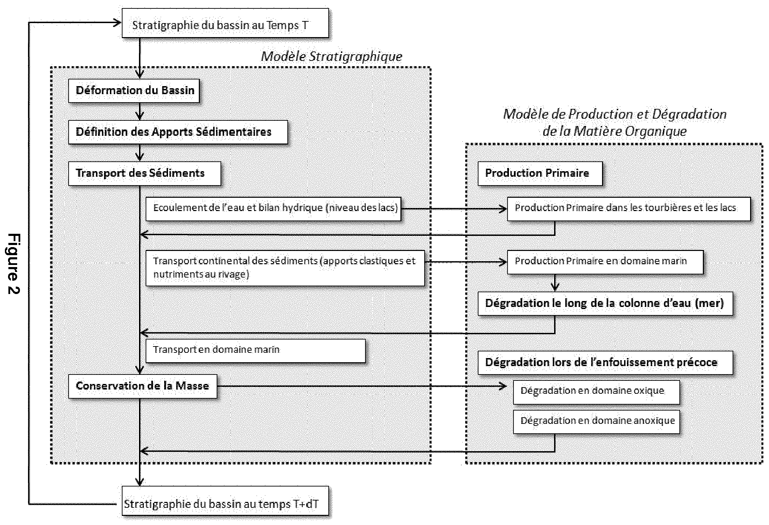

La figure 2 représente un mode de réalisation du procédé itératif de simulation stratigraphique selon l'invention. Les interactions entre le modèle stratigraphique et le modèle de production, transport et dégradation de la matière organique seront décrits avec la description détaillée des étapes 3) et 4). Pour une description plus détaillée des étapes classiques, notamment pour les équations du modèle stratigraphique, on peut se référer notamment à la demande de brevet FR 2 849 211 (US 7,043,367).

1) déformation du bassin

L'espace disponible pour le remplissage sédimentaire du bassin, est la somme de l'eustatisme et de la subsidence. On peut choisir de le définir point par point, soit à partir de courbes eustatiques et de cartes de subsidence, soit directement à partir de cartes d'accommodation, sans utiliser donc de modèles physiques reliant l'eustatisme au climat, ou la subsidence à des processus tectoniques, isostatiques ou thermiques.

Bien que ne modifiant pas l'espace disponible, la compaction influe sur le remplissage sédimentaire en modifiant l'épaisseur des couches sédimentaires. Pour rendre compte de la compaction mécanique, on peut choisir de relier directement la porosité des sédiments à l'enfouissement maximal atteint par eux, par une relation de forme exponentielle qui permet d'obtenir une bonne approximation de la compaction telle que définie par : Parasnis, D.S., 1960, The compaction of sediments and its bearing on some geophysical problems. Journal of the Royal Astronomical Society, v.3, n. 1, pp. 1-28.

Pour tenir compte du cas de roches composées de plusieurs types de sédiments, d'origine minérale ou organique, on peut considérer que chaque sédiment a une porosité indépendante des autres, ce qui revient à assimiler les couches sédimentaires composées d'un mélange de plusieurs sédiments telles que le sable et l'argile à une superposition de multiples sous-couches composées de sédiments purs. La porosité liée à chaque sédiment est ainsi traitée individuellement en fonction de l'enfouissement maximal atteint par la couche sédimentaire.

Cette définition d'une porosité liée aux sédiments permet en particulier de simuler le transport individuel de chaque sédiment et d'en déduire les conséquences sur la porosité des couches sédimentaires.

2) définition des apports sédimentaires

L'espace disponible ayant été créé, la deuxième étape de formation du modèle recherché consiste à introduire des sédiments dans le bassin, ou à les produire à l'intérieur du domaine marin. Les roches sédimentaires sont décrites à l'aide d'un nombre fini de classes de sédiment, telles que le sable, les argiles, les coraux ou les algues .... Chaque maille du modèle numérique du bassin sédimentaire est informée en pourcentage de classe de sédiments. Une maille pourra par exemple contenir 10% de sable et 90 % d'argile, ou 40% de coraux, 30% d'algues et 30% d'argile. Un des buts de la modélisation stratigraphique est de prédire la géométrie et la teneur en sédiment (ou minéralogie), des couches sédimentaires.

Selon l'invention, des classes de sédiments organiques sont ajoutées aux classes de sédiments inorganiques habituellement utilisées dans les modèles stratigraphiques. Ces classes de sédiments correspondent par exemple à la matière organique de type I (matière organique d'origine bactérienne et algaire, se mettant en place en milieu marin ou lacustre), II ou IIs (matière organique issue du phytoplancton, du zooplancton et d'autres organismes marins, se mettant en place en milieu marin), ou III (matière organique issue des plantes supérieures, produites en milieu continental). Elles peuvent aussi correspondre à la silice biogène. Chaque classe de sédiment organique est caractérisée par trois paramètres : sa teneur en carbone organique (TOC), ses indices d'hydrogène et d'oxygène (IH et IO), et sa minéralogie.

Ainsi, le modèle stratigraphique selon l'invention définit N classes de sédiment intégrant les sédiments organiques.

*a) L'introduction de sédiments dans le domaine d'étude*

Les flux de sédiments aux frontières du domaine étudié représentent géologiquement l'apport sédimentaire responsable du remplissage du bassin. Ils peuvent être perçus physiquement en termes de conditions limites du flux de sédiments s'écoulant dans le bassin.

On fixe ces conditions limites soit en imposant la valeur exacte du flux en un secteur de la frontière, soit encore en imposant au flux de sédiments d'avoir une évolution continue. Le premier cas représente une zone d'apport imposée par des conditions externes au bassin telles que le débouché d'un fleuve drainant un bassin versant extérieur au bassin. Le deuxième cas représente une zone libre le long de laquelle le flux de sédiments est régi par des paramètres physiques internes au bassin tels que les caractéristiques des vagues. Lors de la simulation d'un bassin, il est possible de combiner ces deux types de conditions limites, en distinguant par exemple une zone continentale où le flux est imposé par les apports fluviaux externes et une zone marine où le flux est défini par les lois de transport interne.

*b) La production sédimentaire à l'intérieur du domaine d'étude*

Des sédiments peuvent également être produits à l'intérieur du bassin, et plus particulièrement dans le cas de sédiments carbonatés ou organiques. Pour cette phase de la construction du modèle selon l'invention, on a choisi de simuler cette production à l'aide d'une formule empirique reliant le taux de production en chaque point du bassin à la bathymétrie et aux flux de sédiments telle que définie par exemple par : Lawrence et al., 1990, Stratigraphie simulation of sedimentary basins: concepts and calibration in Amer. Assoc. Petrol. Geol. Bull., 74, 3, 273-295.

Afin de prendre en compte l'érosion des récifs lorsque ceux-ci sont émergés, le processus d'altération mécanique de ces récifs peut être simulé en considérant que tout sédiment récifal situé dans la couche d'altération en domaine continental est transformé en sédiment "bioclastique". Les sédiments récifaux et bioclastiques sont transportées dans le bassin à l'instar des sédiments siliciclastiques.

3) transport des sédiments prenant en compte la matière organique

Le but du couplage de la modélisation stratigraphique et organique est de prédire le potentiel en hydrocarbures du bassin, en particulier en déterminant la distribution du TOC, et les valeurs locales des IH et IO, et de la minéralogie, en fonction de la production, du transport et de la dégradation des classes organiques.

Pour déterminer le transport des sédiments selon un mode de réalisation de l'invention, on met en œuvre différentes étapes, pour déterminer consécutivement :

- l'écoulement de l'eau et le bilan hydrique au sein du bassin (modèle stratigraphique),
- la production de matière organique dans les tourbières et lacs (modèle organique),
- le transport continental des sédiments inorganiques et organiques (modèle stratigraphique),
- la production de matière organique en milieu marin (modèle organique),
- la dégradation de la matière organique le long de la colonne d'eau (modèle organique), et
- le transport des sédiments inorganiques et organiques en domaine marin (modèle stratigraphique).

*i) écoulement de l'eau et bilan hydrique*

Cette première étape consiste à déterminer l'écoulement de l'eau et à réaliser un bilan hydrique à l'instant T, pour lequel la simulation stratigraphique est mise en œuvre. L'écoulement de l'eau concerne le flux d'eau s'écoulant à la surface du sol à l'instant T. Pour le bilan hydrique, on peut prendre en compte des phénomènes météorologiques, tels la pluie et l'évaporation de l'eau.

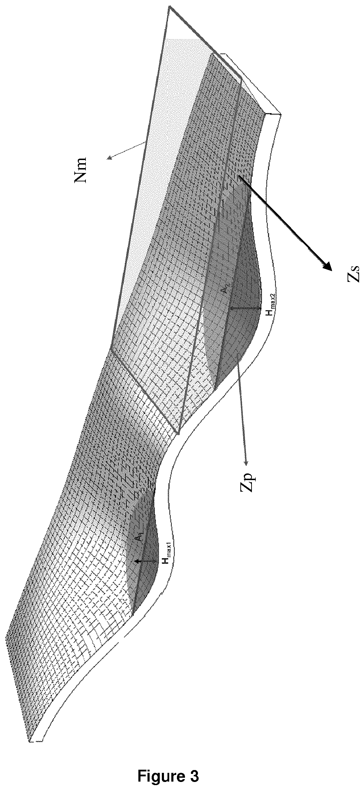

Lors de cette étape, on peut déterminer également un taux d'oxygénation de l'eau. Chaque lac et domaine marin est divisé en deux couches d'eau, délimitées par son seuil topographique : une zone superficielle (Zs) et une zone profonde (Zp) (voir Figure 3). Sur cette figure 3, Nm, désigne le niveau de la mer. Dans le cas des lacs, la zone superficielle (Zs) a une épaisseur nulle. A l'inverse, en domaine marin ouvert sans seuil topographique, la zone profonde (Zp) a une épaisseur nulle. La zone superficielle est supposée toujours oxygénée, tandis que la zone profonde a un pourcentage d'oxygénation dépendant de sa morphologie. Dans le procédé selon l'invention, l'oxygénation réelle de l'eau n'est pas calculée car ce type de calcul serait trop couteux en temps de calcul compte tenu de l'objectif de l'invention (étudier l'évolution des bassins sédimentaires sur des durées de l'ordre du million d'années). Avantageusement, on peut alors utiliser un facteur d'oxygénation, compris entre 0 et 1, notée *Ox*. Ce facteur d'oxygénation est calculé à partir de la physiographie du bassin et de la production primaire locale.

Un facteur d'oxygénation topographique, $Ox_{topo}$, est calculé à partir de la physiographie des lacs et du domaine

$$Ox_{topo} = a_3 \left( \frac{A^{\frac{1}{2}}}{H_{\max}} \right)^{b_3}.$$

marin (voir Figure 3) par une formule du type :

On peut déterminer par ailleurs un facteur de consommation d'oxygène. Dans le cas d'une trop forte production de matière organique, l'oxygène peut être totalement consommé par les processus de dégradation. On considère qu'au-delà d'un seuil de production primaire totale, $PP_{\min}$ le facteur d'oxygénation décroit avec la production. Le facteur de consommation de l'oxygène $Ox_{conso}$ peut se calculer par une formule du type : $Ox_{conso} = 1$ si $PP < PP_{\min}$ sinon

$$Ox_{conso} = \left( \frac{PP_{\min}}{PP} \right)^{b4}.$$

La détermination du facteur d'oxygénation total, noté *Ox,* est alors définie en fonction du facteur d'oxygénation topographique et du facteur de consommation de l'oxygène par une relation de la forme suivante : $Ox = Ox_{topo} . Ox_{conso}$.

*ii) production de matière organique dans les tourbières et les lacs*

Cette étape permet de quantifier le taux de production des sédiments organiques (ou productivité primaire) dans deux environnements sédimentaires, les domaines lacustres, et les tourbières au moyen du modèle organique en fonction de l'écoulement de l'eau et du bilan hydrique. En domaine continental émergé (en dehors des lacs), le taux de production primaire est lié aux niveaux des nappes et à leur fluctuation. Dans le procédé selon l'invention, le niveau des nappes est supposé proportionnel au flux d'eau s'écoulant à la surface du sol. Cette production primaire vient s'ajouter aux apports sédimentaires préalablement définis dans le modèle stratigraphique.

La production primaire de matière organique de classe k dans les tourbières est définie à l'aide d'une loi puissance : $PP_{0,k} = a_{2,k} Q_{eau}^{b2,k}$ avec $Q_{eau}$ le flux d'eau et $a_{2,k}$ et $b_{2,k}$ des constantes spécifiques à la classe de sédiments k.

Ensuite, on détermine le taux de production du sédiment de classe k au moyen d'une formule déterminée par

$$PP_k(z) = PP_{0,k}\left(\frac{z}{z_0}\right)^{-nk}$$

la loi de Martin (1987) du type : si $z > z_0$, sinon $PP_k(z) = PP_{0,k}$ avec $PP_k$ le flux de sédiment de classe k arrivant sur le fond de la tourbière, z la profondeur de la tourbière, $z_0$ la profondeur de la zone photique du milieu aquatique, $n_k$ une constante spécifique au sédiment organique de classe k valant en général de l'ordre de 0,6 à 1,6.

La loi de Martin est décrite notamment dans le document suivant : Martin, J.H., G.A.Knauer, D.M. Karl, W.W.Broenkow.(1987). VERTEX: carbon cycling in the northeast Pacific. Deep-Sea Res. 34: 267-285.

*iii) transport continental des sédiments*

Le transport des sédiments est ensuite calculé uniquement en domaine continental dans un premier temps, afin d'estimer le flux de sédiments, et en particulier des nutriments, arrivant au littoral. Le modèle stratigraphique calcule alors la production et le transport des nutriments dans le bassin sédimentaire, à l'instar d'une production carbonatée ou bactérienne (taux de production fonction de la profondeur de l'eau, de l'hydrodynamisme, de la distance à la côte, de la température et salinité de l'eau, ...). Ce transport continental des sédiments peut prendre en compte des phénomènes tels que l'érosion et la sédimentation en domaine continental.

Un premier calcul du transport des sédiments en domaine marin peut être dans un deuxième temps réalisé, uniquement pour les particules fines, afin de déterminer l'évolution du panache de sédiments en suspension dans l'eau de mer, et en particulier la distribution des nutriments dans le domaine marin.

*iv) production de matière organique en milieu marin*

La distribution des nutriments et la physiographie du bassin sont fournies au modèle organique afin qu'il calcule en domaine marin la production primaire des sédiments organiques marins puis la dégradation de ces sédiments organiques marins lors de sa chute le long de la colonne d'eau.

Cette étape permet de quantifier le taux de production des sédiments organiques (ou productivité primaire) dans un environnement sédimentaire, le domaine marin. Le procédé selon l'invention définit ensuite le taux de production primaire de sédiment organique en domaine aquatique, marin ou lacustre, en fonction de l'apport en nutriment, à l'aide d'une loi puissance. Pour chaque classe de sédiment organique $k : PP_{0,k} = a_{1,k}Q_{nutriment}^{b1,k}$ avec $Q_{nutriment}$ l'apport en nutriment déterminé à l'étape précédente et $a_{1,k}$ et $b_{1,k}$ des constantes spécifiques à la classe de sédiments k.

En fonction des contextes de production (climat, circulation océanique), la nature de la matière organique peut différer. Les conséquences sont des apports en sédiments biogéniques qui peuvent différer.

Toute matière organique produite en milieu aquatique (marin ou lacustre), est supposée produite au toit de la couche superficielle (Zs). Le procédé selon l'invention décrit sa dégradation lors de sa chute le long de la colonne d'eau en prenant en compte l'existence de deux couches d'eau : la couche superficielle oxique (Zs), et la couche profonde partiellement oxique (Zp) (voir Figure 3).

Ensuite, on détermine le taux de production du sédiment de classe k au moyen d'une formule déterminée par

$$PP_k(z) = PP_{0,k}\left(\frac{z}{z_0}\right)^{-nk}$$

la loi de Martin (1987) du type : si $z > z_0$, sinon $PP_k(z) = PP_{0,k}$ avec $PP_k$ le flux de sédiment de classe k arrivant sur le fond marin, z la profondeur du domaine marin, $z_0$ la profondeur de la zone photique du milieu aquatique, $n_k$ une constante spécifique au sédiment organique de classe k valant en général de l'ordre de 0,6 à 1,6.

*v) dégradation de la matière organique le long de la colonne d'eau*

Selon l'invention, la simulation stratigraphique prend en compte de la dégradation de la matière organique le long de la colonne d'eau, c'est-à-dire la dégradation de la matière organique pendant sa production dans le domaine marin. Le modèle organique détermine cette dégradation de la matière organique produite au sein de cette colonne d'eau pour déterminer un flux de sédiment organique arrivant sur le fond marin.

*vi) transport des sédiments et de la matière organique*

Le flux de sédiment organique marin arrivant sur le fonds marin est fourni en retour au modèle stratigraphique. Le modèle stratigraphique calcule classiquement, le transport des sédiments dans le domaine marin, qu'ils soient organiques ou inorganiques. Lors de cette étape, la seule différence avec les modèles stratigraphiques utilisés dans l'art antérieur est la prise en compte d'un nombre plus important de classes de sédiments (comportant des classes de sédiments organiques).

Le transport modélisé concerne par exemple le transport des sédiments à long-terme, à court-terme, ou le transport catastrophique.

Les processus à long terme correspondent au transport permanent des sédiments, induits par les fleuves, les courants marins, ou l'action lente de la gravité (reptation, etc.). Dans le cadre du procédé selon l'invention, on considère que ces processus peuvent être modélisés par une équation de diffusion, contrainte par le flux d'eau et par une disponibilité réduite.

Les processus court termes correspondent au transport des sédiments lors de phénomènes épisodiques mais intenses, tels que les pluies importantes induisant des crues fluviales et des courants hyperpycnaux en domaine marin. Dans le cadre de cette invention, on considère que ces processus peuvent être modélisés par une équation de diffusion améliorée, contrainte par le flux d'eau, par une disponibilité réduite, et par la vitesse de l'écoulement de l'eau.

Un tel transport épisodique de sédiment a depuis fort longtemps été étudié pour des problèmes d'ingénierie fluviale, côtière et marine. Le but de ces études est généralement de déterminer la capacité de transport d'un courant d'eau, afin de savoir si les installations humaines, telles que des maisons, des ponts, des ports ou des plateformes marines, résisteront à un tel courant. On admet généralement qu'un cours d'eau peut être caractérisé par trois grandeurs principales : sa vitesse u, sa profondeur h, et sa largeur w. On admet de plus généralement que les équations de Saint-Venant, correspondant à la formulation pour un fluide de l'équation de Newton (somme des forces = accélération), permet de déterminer ces caractéristiques en tout point d'un écoulement.

Les processus catastrophiques correspondent au transport en masse de sédiments suite à des éboulements de falaise ou de pente. Dans un premier temps, on détermine les zones instables en appliquant un critère de pente critique. Cette pente critique varie localement et dépend de la nature lithologique des sédiments dans le sol.

Toute zone instable est ensuite déplacée en masse, en appliquant l'équation de Newton : l'accélération de l'éboulement est égale à la somme des forces s'appliquant sur l'éboulement (la gravité et la friction). Cette équation permet de mouvoir chaque éboulement à travers le bassin. On peut considérer que l'éboulement se fige dès que sa vitesse décroît en dessous d'un seuil critique.

La réalisation du modèle selon l'invention comporte la résolution numérique des équations de transport basée sur une discrétisation spatiale du bassin étudié, et une discrétisation temporelle de la formation.

Le bassin étudié peut être décomposé en mailles carrées de taille constante, tandis que le remplissage de ce maillage est simulé au niveau d'une succession de temps de calcul, séparés par un pas de temps constant. La largeur des mailles est par exemple de l'ordre de 1 à 10 kilomètres en fonction du bassin simulé, tandis que le pas de temps est de l'ordre de 50 000 ans.

Les équations de transport sont ensuite résolues à l'aide d'un schéma numérique explicite où les paramètres physiques tels que le flux ou l'altitude au temps (n+1) sont exprimés en fonction de paramètres mesurées au temps (n) et dont les valeurs sont ainsi connues.

La simulation conduit à des données quantitatives sur la géométrie du bassin et sur les lithologies des unités sédimentaires.

Pour le détail du calcul de transport, on peut se référer notamment à la demande de brevet FR 2 849 211 (US 7,043,367).

4) conservation de la masse

Le principe de conservation de la masse est utilisé afin de calculer le taux de sédimentation ou d'érosion en chaque point du bassin à partir de la détermination des sédiments transportés. Ce taux de sédimentation, ainsi que la teneur locale en matière organique continentale et marine, sont fournis au modèle organique afin qu'il calcule le taux de préservation de la matière organique lors de son enfouissement précoce, en fonction du taux de sédimentation et de la nature oxique ou anoxique du fonds marin.

En effet, après leur transport, les sédiments organiques subissent une dégradation par des agents oxydants et réducteurs. Cette dégradation est active dans la couche superficielle de sédiments, dont la profondeur varie de quelques centimètres à quelques mètres. Cette couche superficielle est divisée en deux zones : une zone oxydo-réductrice et une zone réductrice. Par souci de cohérence avec les lois qui sont décrites dans ce paragraphe, il est préférable de définir les zones de dégradation de la façon suivante : la zone oxydante, comprise entre la surface eau-sédiment et la profondeur de pénétration des agents oxydants (quelques centimètres), et la zone réductrice, comprise entre la surface et la profondeur de pénétration des agents réducteurs (quelques mètres). Cette définition implique qu'une partie de la zone réductrice est confondue spatialement avec la zone oxydante.

La profondeur de la zone oxydante $Z_{Ox}$ est liée à la distance de pénétration de l'oxygène, caractérisée par le facteur d'oxygénation $Ox$ décrit précédemment : $Z_{Ox} = Z_0.Ox$. Au contraire, la zone réductrice est indépendante de la fraction d'oxygénation et est supposée toujours non nulle ($Z_{Red} > 0$).

Le niveau de dégradation de la matière organique durant la phase d'enfouissement est conditionné par le temps de résidence de la matière organique dans chacune des zones de dégradation. La loi de dégradation selon l'invention prend en compte cet effet en supposant que le taux de dégradation est une fonction de la vitesse de sédimentation :

$$BE_{Ox,k} = \left(a_{Ox,k} + b_{Ox,k}.Z_{Ox}.v_s\right)^{n_{Ox,k}} \text{ et } BE_{Red,k} = \left(a_{Red,k} + b_{Red,k}.v_s\right)^{n_{Rred,k}} .$$

Le taux de préservation total est alors déduit selon une formule du type : $BE_k = BE_{Ox,k}.BE_{Red,k}$.

5) quantification d'un potentiel en hydrocarbures

A partir de la simulation stratigraphique couplée avec le modèle organique, on peut déterminer le potentiel en hydrocarbures du bassin sédimentaire. En effet, les hydrocarbures sont issus de la matière organique présente dans le bassin. Ce potentiel peut correspondre à la distribution des hydrocarbures dans le bassin, à la richesse en matière organique ainsi que son origine.

Pour cette quantification, il est possible de déterminer le TOC (la teneur en carbone organique), les indices d'hydrogène IH et oxygène IO, et la minéralogie de la matière organique au sein des couches du bassin sédimentaire.

Par exemple, l'indice d'hydrogène final dans les matières organiques préservées est calculé en fonction des proportions de chaque type de matière organique présent. De plus, comme le degré et la nature de préservation ("Burial Efficiency", condition oxique ou anoxique) contrôle la valeur de cet indice, l'indice d'hydrogène final est calculé selon

$$\text{IH} = \sum_{k=1}^{N} c_k.\text{IH}_k.BE_{Ox,k}^{i1,k}.BE_{Red,k}^{i2,k} .$$

une loi propre à l'invention de la forme :

6) exploitation du bassin sédimentaire

L'exploration pétrolière consiste à rechercher des gisements d'hydrocarbures dans un bassin sédimentaire. Grâce à la quantification du potentiel en hydrocarbures selon l'invention, on peut prédire la distribution des hydrocarbures, leur qualité et leurs origines au sein d'un bassin sédimentaire.

L'exploitation du bassin peut prendre plusieurs formes, notamment :

- la réalisation de forages d'exploration dans les différentes zones présentant le meilleur potentiel, afin de confirmer ou infirmer le potentiel estimé préalablement, et d'acquérir de nouvelles données pour alimenter de nouvelles études plus précises,

- la réalisation de forages d'exploitation (puits producteurs ou injecteurs) pour la récupération des hydrocarbures présents au sein du bassin sédimentaire dans les zones présentant le meilleur potentiel.

Pour toutes les lois présentées dans cette demande, la calibration des paramètres de ces lois ($a,b,c,i,n$) peut se baser sur différentes bases de données, propres à l'environnement de dépôt (marin ou lacustre, milieux différenciés par des paramètres géochimiques comme la salinité) et au type de matière organique (marine ou terrestre). Par exemple, concernant la matière organique d'origine marine, les paramètres de calibrations de ces lois sont déduits des données synthétisées par Betts et Holland (1991) dans le document suivant : Betts, J.N. and Holland, H.D. (1991). The oxygen content of ocean bottom waters, the burial efficiency of organic carbon, and the régulation of atmospheric oxygen Palaeogeography, Palaeoclimatology, Palaeoecology (Global and Planetary Change Section), 97 (1991) 5-18. En revanche, concernant la matière organique d'origine terrestre, les paramètres de calibrations de ces lois sont déduits des données synthétisées par Aller (1998) dans le document suivant : Aller, R.C. (1998). Mobile deltaic and continental shelf muds as suboxic, fluidized bed reactors, Mar. Chem., 61, 143- 155.

Alternativement et pour obtenir des informations plus précises, la calibration de ces paramètres peut être obtenue expérimentalement, par exemple à partir de mesures réalisées au niveau du bassin sédimentaire.

Exemple d'application

Le procédé selon l'invention a été testé et validé sur des cas synthétiques et réels, tel que le Bassin des Appalaches, en Pennsylvanie (USA). A la fin du Paléozoïque, vers 400 à 300 millions d'années (Ma) avant notre ère, la chaîne de montagnes des Appalaches s'est mise en place et a induit la formation d'un bassin sédimentaire appelé Bassin des Appalaches. Au cours du Dévonien (390-360 Ma), ce bassin correspondait à un bras de l'océan Téthys qui allait progressivement se fermer et se faire combler par les produits de l'érosion de la chaîne des Appalaches. Du fait de cette fermeture progressive de la connexion océanique, le milieu marin est devenu pauvre en Oxygène, voire anoxique, et la matière organique marine a ainsi pu être préservée. Cette matière organique a donné naissance aux argiles riches en gaz de la formation Marcellus (ou Marcellus Shale), actuellement exploitées aux USA.

Afin de tester le procédé selon l'invention, une modélisation couplée stratigraphique - organique a été réalisée sur un bassin mesurant 800 km x 600 km, et discrétisé avec des mailles de 5 km x 5 km. Cette modélisation représente l'évolution du bassin de 390 à 360 Ma, avec un pas de temps de 1 Ma. Quatre classes de sédiments (ou minéralogie), sont modélisées : les sables (ou Quartz et Feldspaths indifférenciés), les argiles (ou Phyllosilicates), les carbonates (ou Calcite) et les sédiments organiques.

La déformation du bassin est définie à l'aide de trois paramètres :

- une déformation tectonique et flexurale induite par la croissance de la chaîne des Appalaches,
- une déformation flexurale interne due au poids des sédiments, et
- une variation du niveau de la mer. La déformation tectonique a été mesurée à partir des cartes publiées d'épaisseur actuelle de sédiments en Pennsylvanie ; la déformation flexurale interne a été modélisée en utilisant un modèle élastique 3D, et la variation du niveau de la mer est définie à l'aide des courbes de Haq.

Les cartes d'épaisseurs actuelles ont permis d'estimer également les apports en sédiments, de l'ordre de 12800 km3/Ma, et entrant par le bord Sud-Est du bassin, ainsi que le taux de production des carbonates et de la matière organique marine, respectivement de l'ordre de 10 et 1 m/Ma.

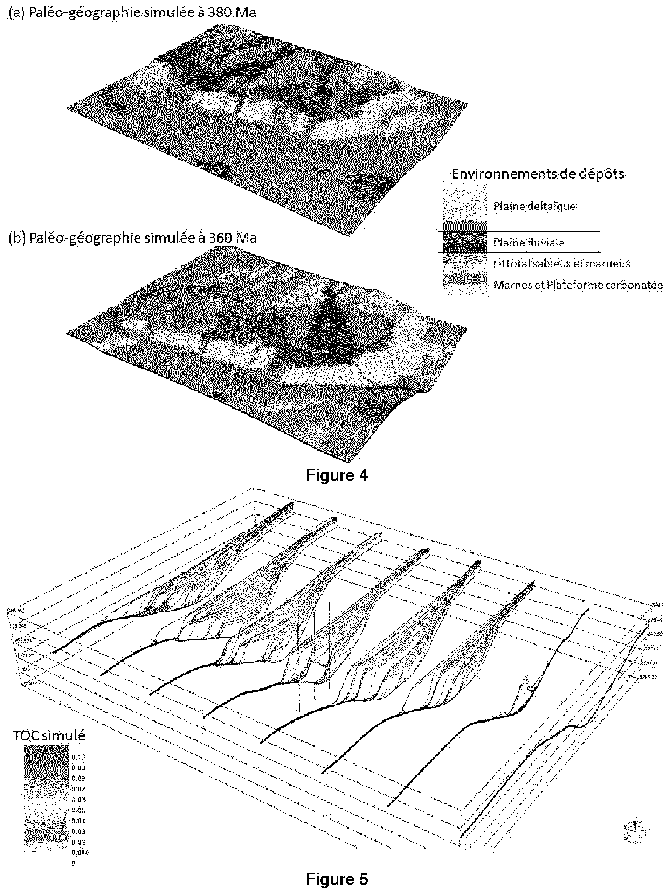

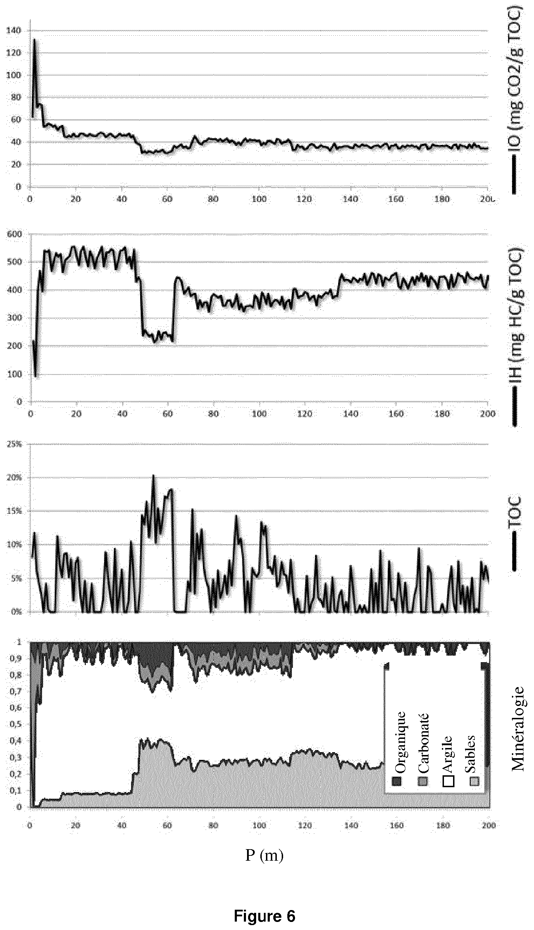

La modélisation couplée stratigraphique - organique selon l'invention permet de reproduire l'évolution du Bassin des Appalaches (voir figures 4 a et b), avec en particulier la croissance du delta de la Catskill qui vient progressivement combler le bassin. Au-delà de la simulation de l'évolution de la géographie du bassin, la modélisation couplée stratigraphique - organique selon l'invention permet de quantifier la géométrie de chaque couche sédimentaire (voir figure 5), mais également la teneur en minéralogie et en particulier en carbone organique (ou TOC), ainsi que les indices d'hydrogène IH et d'oxygène IO des sédiments organiques en fonction de la profondeur P en m (voir figure 6).

**Revendications**

1. Procédé d'exploitation d'un bassin sédimentaire, dans lequel on construit une image quantifiant un potentiel en hydrocarbures dudit bassin sédimentaire, **caractérisé en ce qu'**on réalise les étapes suivantes :

   a) on décompose ledit bassin sédimentaire en couches géologiques, chaque couche géologique correspondant à un dépôt de sédiments pendant une durée donnée ;
   b) on détermine la composition desdites couches géologiques au moyen d'un couplage entre une simulation stratigraphique et un modèle de production et de dégradation de matière organique, en déterminant ladite composition desdites couches géologiques au moyen d'une simulation stratigraphique itérative, du passé jusqu'à un temps plus récent, au sein de chaque couche géologique, au moyen d'un modèle stratigraphique et d'un modèle de production et de dégradation de matière organique, en mettant en œuvre des étapes suivantes :

      i) on détermine la production de ladite matière organique au sein de ladite couche géologique au moyen dudit modèle de production et de dégradation de matière organique ;
      ii) on modélise le transport des sédiments et de ladite matière organique produite au moyen dudit modèle stratigraphique ;
      iii) on détermine la dégradation de ladite matière organique lors dudit transport au moyen dudit modèle de production et de dégradation de matière organique ;
      iv) on détermine la stratigraphie dudit bassin en tenant compte de la conservation des masses au moyen dudit transport des sédiments et de la dégradation de la matière organique ; et
      v) on détermine la dégradation de la matière organique au sein de ladite stratigraphie au moyen dudit modèle de production et de dégradation de matière organique;

c) on quantifie le potentiel en hydrocarbures desdites couches géologiques dudit bassin sédimentaire à partir de ladite composition, les étapes a) à c) étant mises en oeuvre par ordinateur; et

d) on exploite ledit bassin sédimentaire en fonction de ladite quantification.

2. Procédé selon la revendication 1, dans lequel pour ladite simulation stratigraphique, les sédiments et ladite matière organique sont décrits à l'aide d'un nombre fini de classes de sédiments et de matière organique.

3. Procédé selon l'une des revendications précédentes, dans lequel on quantifie ledit potentiel en hydrocarbures en déterminant une teneur en carbone organique (TOC) contenue dans chaque couche géologique et/ou en déterminant des indices d'hydrogène (IH) et/ou d'oxygène (IO) et/ou en déterminant la minéralogie des sédiments au sein de chaque couche géologique.

4. Procédé selon l'une des revendications précédentes, dans lequel on détermine la production de ladite matière organique en prenant en compte une estimation de la distribution des nutriments par ledit modèle stratigraphique.

5. Procédé selon la revendication 4, dans lequel on détermine la production de matière organique dans au moins un

$$PP_k(z) = PP_{0,k}\left(\frac{z}{z_0}\right)^{-nk}$$

domaine marin ou lacustre à partir d'une équation du type : si $z > z_0$, sinon $PP_k(z) = PP_{0,k}$ avec $PP_k$ le flux de sédiment de classe k arrivant sur un fond marin, z la profondeur dudit fond marin ou lacustre, $z_0$ la profondeur de la zone photique du milieu aquatique, $n_k$ une constante spécifique à la classe k de

$$PP_{0,k} = a_{1,k} Q_{nutriment}^{b1,k}$$

sédiment organique et $PP_0$ le taux de production primaire défini par avec $Q_{nutriment}$ l'apport en nutriment et $a_{1,k}$ et $b_{1,k}$ des constantes spécifiques à la classe de sédiments k.

6. Procédé selon l'une des revendications précédentes, dans lequel on détermine la production de matière organique

$$PP_k(z) = PP_{0,k}\left(\frac{z}{z_0}\right)^{-nk}$$

dans les tourbières à partir d'une équation du type : si $z > z_0$, sinon $PP_k(z) = PP_{0,k}$ avec $PP_k$ le flux de sédiment de classe k arrivant sur le fond de la tourbière, z la profondeur de la tourbière, $z_0$ la profondeur de la zone photique du milieu aquatique, $n_k$ une constante spécifique au sédiment organique de classe

$$PP_{0,k} = a_{2,k} Q_{eau}^{b2,k}$$

k et $PP_0$ le taux de production primaire défini par avec $Q_{eau}$ le flux d'eau et $a_{2,k}$ et $b_{2,k}$ des constantes spécifiques à la classe de sédiment k.

7. Procédé selon l'une des revendications précédentes, dans lequel on détermine la dégradation de ladite matière organique par détermination d'un taux de préservation de la matière organique au moyen des étapes suivantes :

(1) on détermine un facteur d'oxygénation de l'eau ;
(2) on détermine un taux de préservation de matière organique en zone oxydante et un taux de préservation de matière organique en zone réductrice au moyen dudit facteur d'oxygénation de l'eau ;
(3) on détermine ledit taux de préservation de la matière organique au moyen desdits taux de préservation de matière organique en zone oxydante et en zone réductrice.

8. Procédé selon la revendication 7, dans lequel on détermine ledit facteur d'oxygénation de l'eau Ox au moyen d'une formule du type : $Ox = Ox_{topo} . Ox_{conso}$ avec $Ox_{topo}$ le facteur d'oxygénation topographique et $Ox_{conso}$ le facteur de

$$Ox_{topo} = a_3 \left(\frac{A^{\frac{1}{2}}}{H_{max}}\right)^{b_3}$$

consommation d'oxygène, $Ox_{topo}$ étant défini par une relation du type : avec A la surface du milieu aquatique, $H_{max}$ la profondeur maximal dudit milieu aquatique, $a_3$ et $b_3$ des constantes spécifiques et

$Ox_{conso}$ étant défini par une relation du type : $Ox_{conso}$ = 1 si $PP < PP_{min}$ sinon $$Ox_{conso} = \left(\frac{PP_{min}}{PP}\right)^{b4}$$ avec PP la somme des taux de production $PP_k$ de chaque classe k de sédiment organique, $PP_{min}$ le seuil de production primaire totale et $b_4$ une constante.

**9.** Procédé selon l'une des revendications 7 ou 8, dans lequel on détermine ledit taux de préservation de matière organique $BE_{Ox,k}$ en zone oxydante par une formule du type : $BE_{Ox,k} = (a_{Ox,k} + b_{Ox,k} \cdot Z_{Ox} \cdot v_s)^{nOx,k}$ avec $v_s$ la vitesse de sédimentation, $a_{Ox,k}$, $b_{Ox,k}$ et $n_{Ox,k}$ des constantes, $Z_{Ox}$ la distance de pénétration de l'oxygène définie par une formule du type : $Z_{Ox} = Z_0 \cdot Ox$ avec $Z_0$ la profondeur maximale du milieu aquatique.

**10.** Procédé selon l'une des revendications 7 à 9, dans lequel on détermine ledit taux de préservation de matière organique $BE_{Red,k}$ en zone réductrice par une formule du type : $$BE_{Red,k} = \left(a_{Red,k} + b_{Red,k} \cdot v_s\right)^{n_{Rred,k}}$$ avec $v_s$ la vitesse de sédimentation, $a_{Red,k}$, $b_{Red,k}$ et $n_{Red,k}$ des constantes.

**11.** Procédé selon les revendications 9 et 10, dans lequel on détermine le taux de préservation de la matière organique $BE_k$ au moyen d'une relation du type : $BE_k = BE_{Ox,k} \cdot BE_{Red,k}$.

**12.** Procédé selon les revendications 3 et 11, dans lequel ledit indice d'hydrogène est déterminé au moyen d'une formule du type : $$IH = \sum_{k=1}^{N} c_k \cdot IH_k \cdot BE_{Ox,k}^{i1,k} \cdot BE_{Red,k}^{i2,k}$$ avec IH l'indice d'hydrogène final, N le nombre de classes de sédiments et de matière organiques, $c_k$ la fraction massique de matière organique k, $IH_k$ l'indice d'hydrogène initial de la classe de sédiment k, $BE_{Ox,k}$ et $BE_{Red,k}$ les taux de préservation de la matière organique k, et i1 et i2 des constantes spécifiques à chaque classe k de sédiment.

**13.** Produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur.


**Patentansprüche**

**1.** Verfahren zur Ausbeutung eines Sedimentbeckens, wobei ein Bild erstellt wird, das ein Potential an Kohlenwasserstoffen des Sedimentbeckens quantifiziert, **dadurch gekennzeichnet, dass** die folgenden Schritte ausgeführt werden:

a) Das Sedimentbecken wird in geologische Schichten zerlegt, wobei jede geologische Schicht einer Ablagerung von Sedimenten während einer gegebenen Dauer entspricht;
b) es wird die Zusammensetzung der geologischen Schichten mittels einer Kopplung zwischen einer stratigraphischen Simulation und einem Produktions- und Degradationsmodell von organischem Material bestimmt, indem die Zusammensetzung der geologischen Schichten mittels einer iterativen stratigraphischen Simulation von der Vergangenheit bis zu einer jüngeren Zeit innerhalb jeder geologischen Schicht mittels eines stratigraphischen Modells und eines Produktions- und Degradationsmodells von organischem Material bestimmt wird, indem die folgenden Schritte durchgeführt werden:

i) Es wird die Produktion des organischen Materials innerhalb der geologischen Schicht mittels des Produktions- und Degradationsmodells von organischem Material bestimmt;
ii) es wird der Transport der Sedimente und des produzierten organischen Materials mittels des stratigraphischen Modells modelliert;
iii) es wird die Degradation des organischen Materials während des Transports mittels des Produktions- und Degradationsmodells von organischem Material bestimmt;

iv) es wird die Stratigraphie des Beckens unter Berücksichtigung der Erhaltung der Massen mittels des Transports der Sedimente und der Degradation des organischen Materials bestimmt; und

v) es wird die Degradation des organischen Materials innerhalb der Stratigraphie mittels des Produktions- und Degradationsmodells von organischem Material bestimmt;

c) es wird das Potential an Kohlenwasserstoffen der geologischen Schichten des Sedimentbeckens aus der Zusammensetzung bestimmt, wobei die Schritte a) bis c) von einem Computer durchgeführt werden; und

d) das Sedimentbecken wird in Abhängigkeit von der Quantifizierung ausgebeutet.

2. Verfahren nach Anspruch 1, wobei für die stratigraphische Simulation die Sedimente und das organische Material mithilfe einer endlichen Anzahl von Klassen von Sedimenten und von organischem Material beschrieben werden.

3. Verfahren nach einem der vorhergehenden Ansprüche, wobei das Potential an Kohlenwasserstoffen quantifiziert wird, indem ein Gehalt an organischem Kohlenstoff (TOC) bestimmt wird, der in jeder geologischen Schicht enthalten ist, und/oder indem Wasserstoffindizes (IH) und/oder Sauerstoffindizes (IO) bestimmt werden und/oder indem die Mineralogie der Sedimente innerhalb jeder geologischen Schicht bestimmt wird.

4. Verfahren nach einem der vorhergehenden Ansprüche, wobei die Produktion des organischen Materials unter Berücksichtigung einer Schätzung der Verteilung der Nährstoffe durch das stratigraphische Modell bestimmt wird.

5. Verfahren nach Anspruch 4, wobei die Produktion von organischem Material in wenigstens einem Meeres- oder

$$PP_k(z) = PP_{0,k}\left(\frac{z}{z_0}\right)^{-nk},$$ falls $z > z_0$,

Seengebiet anhand einer Gleichung des Typs

$PP_k(z) = pp_{0,k}$, sonst,

bestimmt wird, wobei $PP_k$ der Sedimentfluss der Klasse k ist, der an einem Meeresboden ankommt, z die Tiefe des Meeres- oder Seebodens ist, $z_0$ die Tiefe der euphotischen Zone des aquatischen Milieus ist, $n_k$ eine für die Klasse k von organischem Sediment spezifische Konstante ist und $PP_0$ die primäre Produktionsrate ist, welche durch

$$PP_{0,k} = a_{1,k}Q_{N\ddot{a}hrstoff}^{b1,k}$$ definiert ist, wobei $Q_{N\ddot{a}hrstoff}$ der Nährstoffeintrag ist und $a_{1,k}\ b_{1,k}$ für die Klasse von Sedimenten k spezifische Konstanten sind.

6. Verfahren nach einem der vorhergehenden Ansprüche, wobei die Produktion von organischem Material in den

$$PP_k(z) = PP_{0,k}\left(\frac{z}{z_0}\right)^{-nk},$$

Mooren anhand einer Gleichung des Typs falls $z > z_0$,

$PP_k(z) = PP_{0,k}$, sonst,

bestimmt wird, wobei $PP_k$ der Sedimentfluss der Klasse k ist, der am Boden des Moores ankommt, $z_0$ die Tiefe der euphotischen Zone des aquatischen Milieus ist, $n_k$ eine für das organische Sediment der Klasse k spezifische Konstante ist und $PP_0$ die primäre Produktionsrate ist, welche durch $$PP_{0,k} = a_{2,k}Q_{Wasser}^{b2,k}$$ definiert ist, wobei $Q_{Wasser}$ der Wasserfluss ist und $a_{2,k}\ b_{2,k}$ für die Sedimentklasse k spezifische Konstanten sind.

7. Verfahren nach einem der vorhergehenden Ansprüche, wobei die Degradation des organischen Materials durch Bestimmung einer Erhaltungsrate des organischen Materials mittels der folgenden Schritte bestimmt wird:

(1) es wird ein Sauerstoffanreicherungsgrad des Wassers bestimmt;
(2) es werden eine Erhaltungsrate von organischem Material in der oxidierenden Zone und eine Erhaltungsrate von organischem Material in der reduzierenden Zone mittels des Sauerstoffanreicherungsgrades des Wassers bestimmt;
(3) es wird die Erhaltungsrate des organischen Materials mittels der Erhaltungsraten von organischem Material in der oxidierenden Zone und in der reduzierenden Zone bestimmt.

8. Verfahren nach Anspruch 7, wobei der Sauerstoffanreicherungsgrad des Wassers *Ox* mittels einer Formel des Typs *Ox* = *Ox_topo*.*Ox_conso* bestimmt wird, wobei *Ox_topo* der topographische Sauerstoffanreicherungsgrad und *Ox_conso* der

$$Ox_{topo} = a_3 \left( \frac{A^{\frac{1}{2}}}{H_{\max}} \right)^{b_3}$$

Sauerstoffverbrauchsfaktor ist, wobei *Ox_topo* durch eine Beziehung des Typs definiert ist, wobei *A* die Fläche des aquatischen Milieus ist, $H_{max}$ die maximale Tiefe des aquatischen Milieus ist, $a_3$ und $b_3$ spezifische Konstanten sind und *Ox_conso* durch eine Beziehung des Typs $Ox_{conso}$ = 1, falls $PP < PP_{min}$,

$$Ox_{conso} = \left( \frac{PP_{\min}}{PP} \right)^{b_4},$$

sonst, definiert ist, wobei *PP* die Summe der Produktionsraten $PP_k$ aller Klassen k von organischen Sedimenten ist, $PP_{min}$ der Schwellenwert der primären Gesamtproduktion ist und $b_4$ eine Konstante ist.

9. Verfahren nach einem der Ansprüche 7 oder 8, wobei die Erhaltungsrate von organischem Material $BE_{Ox,k}$ in der oxidierenden Zone durch eine Formel des Typs $BE_{Ox,k} = (a_{Ox,k} + b_{Ox,k} \cdot Z_{Ox} \cdot v_s)^{n_{Ox,k}}$ bestimmt wird, wobei $v_s$ die Sedimentationsgeschwindigkeit ist, $a_{Ox,k}$, $b_{Ox,k}$ und $n_{Ox,k}$ Konstanten sind, $Z_{ox}$ die Eindringtiefe des Sauerstoffs ist, die durch eine Formel des Typs $Z_{Ox} = Z_0 \cdot Ox$ definiert ist, wobei $Z_0$ die maximale Tiefe des aquatischen Milieus ist.

10. Verfahren nach einem der Ansprüche 7 bis 9, wobei die Erhaltungsrate von organischem Material $BE_{Red,k}$ in der reduzierenden Zone durch eine Formel des Typs $BE_{Red, k} = (a_{Red,k} + b_{Red,k} \cdot v_s)^{n_{Red,k}}$ bestimmt wird, wobei $v_s$ die Sedimentationsgeschwindigkeit ist, $a_{Red,k}$, $b_{Red,k}$ und $n_{Red,k}$ Konstanten sind.

11. Verfahren nach den Ansprüchen 9 und 10, wobei die Erhaltungsrate des organischen Materials $BE_k$ mittels einer Beziehung des Typs $BE_k = BE_{Ox,k} \cdot BE_{Red,k}$ bestimmt wird.

12. Verfahren nach den Ansprüchen 3 und 11, wobei der Wasserstoffindex mittels einer Formel des Typs

$$IH = \sum_{k=1}^{N} c_k \cdot IH_k \cdot BE_{Ox,k}^{i1,k} \cdot BE_{Red,k}^{i2,k}$$

bestimmt wird, wobei *IH* der endgültige Wasserstoffindex ist, *N* die Anzahl der Klassen von Sedimenten und organischem Material ist, $c_k$ der Massenanteil von organischem Material k ist, $IH_k$ der anfängliche Wasserstoffindex der Sedimentklasse k ist, $BE_{Ox, k}$ und $BE_{Red,k}$ die Erhaltungsraten des organischen Materials k sind und i1 und i2 Konstanten sind, die für jede Sedimentklasse k spezifisch sind.

13. Computerprogrammprodukt, das aus einem Kommunikationsnetz herunterladbar und/oder auf einem computerlesbaren Medium aufgezeichnet und/oder von einem Prozessor ausführbar ist und Programmcodeanweisungen für die Durchführung des Verfahrens nach einem der vorhergehenden Ansprüche, wenn das Programm auf einem Computer ausgeführt wird, umfasst.

**Claims**

1. Method for exploiting a sedimentary basin, in which an image is constructed that quantifies a hydrocarbon potential of said sedimentary basin, **characterized in that** the following steps are carried out:

   a) said sedimentary basin is broken down into geological layers, each geological layer corresponding to a deposition of sediments for a given duration;
   b) the composition of said geological layers is determined by means of a coupling between a stratigraphic simulation and a model of production and breakdown of organic matter, by determining said composition of said geological layers by means of an iterative stratigraphic simulation, from the past to a more recent time, within each geological layer, by means of a stratigraphic model and of a model of production and breakdown of organic matter, by implementing the following steps:

      i) the production of said organic matter within said geological layer is determined by means of said model of production and breakdown of organic matter;

ii) the transport of the sediments and of said organic matter produced is modelled by means of said stratigraphic model;

iii) the breakdown of said organic matter during said transport is determined by means of said model of production and breakdown of organic matter;

iv) the stratigraphy of said basin is determined by taking account of the conservation of the masses by means of said transport of sediments and of the breakdown of the organic matter; and

v) the breakdown of the organic matter within said stratigraphy is determined by means of said model of production and breakdown of organic matter;

c) the hydrocarbon potential of said geological layers of said sedimentary basin is quantified on the basis of said composition, steps a) to c) being implemented by computer; and

d) said sedimentary basin is exploited in dependence on said quantification.

2. Method according to Claim 1, in which, for said stratigraphic simulation, the sediments and said organic matter are described with the aid of a finite number of sediment classes and organic matter classes.

3. The method according to one of the preceding claims, in which said hydrocarbon potential is quantified by determining an organic carbon content (TOC) contained in each geological layer and/or by determining hydrogen indices (IH) and/or oxygen indices (IO) and/or by determining the mineralogy of the sediments within each geological layer.

4. Method according to one of the preceding claims, in which the production of said organic matter is determined by taking into account an estimation of the distribution of nutrients by said stratigraphic model.

5. Method according to Claim 4, in which the production of organic matter in at least one marine or lacustrine domain is determined on the basis of an equation of the type: $PP_k(z) = PP_{0,k}\left(\frac{z}{z_0}\right)^{-nk}$ if $z > z_0$, else $PP_k(z) = PP_{0,k}$, where $PP_k$ is the flux of sediment of class $k$ arriving on a sea bed, $z$ is the depth of said sea bed or lake bed, $z_0$ is the depth of the photic zone of the body of water, $n_k$ is a constant specific to the organic sediment class $k$, and $PP_0$ is the degree of primary production defined by $PP_{o,k} = a_{1,k}Q_{nutriment}^{b1,k}$, where $Q_{nutriment}$ is the nutrient supply and $a_{1,k}$ and $b_{1,k}$ are constants specific to the sediment class $k$.

6. Method according to one of the preceding claims, in which the production of organic matter in the peatlands is determined on the basis of an equation of the type: $PP_k(z) = PP_{0,k}\left(\frac{z}{z_0}\right)^{-nk}$ if $z > z_0$, else $PP_k(z) = PP_{0,k}$, where $PP_k$ is the flux of sediment of class $k$ arriving on the bed of the peatland, $z$ is the depth of the peatland, $z_0$ is the depth of the photic zone of the body of water, $n_k$ is a constant specific to the organic sediment of class $k$, and $PP_0$ is the degree of primary production defined by $PP_{o,k} = a_{2,k}Q_{eau}^{b2,k}$, where $Q_{eau}$ is the flux of water and $a_{2,k}$ and $b_{2,k}$ are constants specific to the sediment class $k$.

7. Method according to one of the preceding claims, in which the breakdown of said organic matter is determined by determining a degree of preservation of the organic matter, by means of the following steps:

(1) a water oxygenation factor is determined;

(2) a degree of preservation of organic matter in oxidizing zones and a degree of preservation of organic matter in reducing zones are determined by means of said water oxygenation factor;

(3) said degree of preservation of the organic matter is determined by means of said degrees of preservation of organic matter in oxidizing zones and in reducing zones.

8. Method according to Claim 7, in which said water oxygenation factor $Ox$ is determined by means of a formula of the type: $Ox = Ox_{topo}.Ox_{conso}$, where $Ox_{topo}$ is the topographic oxygenation factor and $Ox_{conso}$ is the oxygen consumption

$$Ox_{topo} = a_3 \left( \frac{A^{\frac{1}{2}}}{H_{max}} \right)^{b_3},$$

factor, $Ox_{topo}$ being defined by a relation of the type: where A is the surface area of the body of water, $H_{max}$ is the maximum depth of said body of water, and $a_3$ and $b_3$ are specific constants, and

$Ox_{conso}$ being defined by a relation of the type: $Ox_{conso}$ = 1 if $PP < PP_{min}$, else $Ox_{conso} = \left( \frac{PP_{min}}{PP} \right)^{b_4}$, where $PP$ is the sum of the degrees of production $PP_k$ of each organic sediment class $k$, $PP_{min}$ is the total primary production threshold and $b_4$ is a constant.

**9.** Method according to either of Claims 7 and 8, in which said degree of preservation of organic matter $BE_{OX,k}$ in oxidizing zones is determined by a formula of the type: $BE_{ox,k} = (a_{Ox,k} + b_{Ox,k} \cdot Z_{Ox} \cdot V_s)^{nOx,k}$, where $v_s$ is the sedimentation velocity, $a_{Ox,k}$, $b_{Ox,k}$ and $n_{Ox,k}$ are constants and $Z_{ox}$ is the oxygen penetration distance defined by a formula of the type: $Z_{ox} = Z_0 \cdot Ox$, where $Z_0$ is the maximum depth of the body of water.

**10.** Method according to one of Claims 7 to 9, in which said degree of preservation of organic matter $BE_{Red,k}$ in reducing zones is determined by a formula of the type: $BE_{Re\,d,k} = (a_{Red,k} + b_{Red,k} \cdot V_s)^{nRed,k}$, where $v_s$ is the sedimentation velocity and $a_{Red,k}$, $b_{Red,k}$ and $n_{Re\,d,k}$ are constants.

**11.** Method according to Claims 9 and 10, in which the degree of preservation of the organic matter $BE_k$ is determined by means of a relation of the type: $BE_k = BE_{Ox,k} \cdot BE_{Red,k}$.

**12.** Method according to Claims 3 and 11, in which said hydrogen index is determined by means of a formula of the

$$IH = \sum_{k=1}^{N} c_k \cdot IH_k \cdot BE_{Ox,k}^{i1,k} \cdot BE_{Red,k}^{i2,k},$$

type: where IH is the final hydrogen index, N is the number of sediment classes and organic matter classes, $c_k$ is the mass fraction or organic matter $k$, $1H_k$ is the initial hydrogen index of the sediment class $k$, $BE_{Ox,k}$ and $BE_{Re\,d,k}$ are the degrees of preservation of the organic matter $k$, and i1 and i2 are constants specific to each sediment class $k$.

**13.** Computer program product downloadable from a communication network and/or recorded on a medium that is readable by computer and/or executable by a processor, comprising program code instructions for implementing the method according to one of the preceding claims, when said program is executed on a computer.

Stratigraphie du Bassin au Temps T

↓

Déformation du Bassin

*Subsidence Tectonique et Flexure*
*Eustatisme*
*Compaction*

↓

Définition des Apports Sédimentaires

*Apports Clastiques aux Frontières du Bassin*
*Production Carbonatée au sein du Bassin*

↓

Transport des Sédiments

↓

*Transport permanent, épisodique et/ou*
*catastrophique des Sédiments*

↓

Conservation de la Masse

*Calcul de la nouvelle Stratigraphie à l'aide*
*du Principe de Conservation de la Masse*

↓

Stratigraphie du Bassin au Temps T+dT

**Art antérieur**
**Figure 1**

**Figure 2**

Figure 3

(a) Paléo-géographie simulée à 380 Ma

(b) Paléo-géographie simulée à 360 Ma

Environnements de dépôts

Plaine deltaïque

Plaine fluviale

Littoral sableux et marneux

Marnes et Plateforme carbonatée

**Figure 4**

TOC simulé

0.10
0.09
0.08
0.07
0.06
0.05
0.04
0.03
0.02
0.010
0

**Figure 5**

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002013687 A1
- FR 2849211
- US 7043367 B

**Littérature non-brevet citée dans la description**

- **HARBAUGH.** *Bonham-Carter,* 1970
- Modelling source rock distribution and quality variations: The OF-Mod approach. **MANN, U. ; ZWEIGEL, J.** Analogue and Numerical Forward Modelling of Sedimentary Systems; from Understanding to Prédiction. Special Publication 40 of the International Association of Sedimentologists, 2008, 239-274
- **PARASNIS, D.S.** The compaction of sediments and its bearing on some geophysical problems. *Journal of the Royal Astronomical Society,* 1960, vol. 3 (1), 1-28
- **LAWRENCE et al.** Stratigraphie simulation of sedimentary basins: concepts and calibration. *Amer. Assoc. Petrol. Geol. Bull.,* 1990, vol. 74 (3), 273-295
- **MARTIN, J.H. ; G.A.KNAUER ; D.M. KARL ; W.W.BROENKOW.** VERTEX: carbon cycling in the northeast Pacific. *Deep-Sea Res.,* 1987, vol. 34, 267-285
- **BETTS, J.N. ; HOLLAND, H.D.** *The oxygen content of ocean bottom waters, the burial efficiency of organic carbon, and the régulation of atmospheric oxygen Palaeogeography, Palaeoclimatology, Palaeoecology (Global and Planetary Change Section),* 1991, vol. 97, 5-18
- **ALLER, R.C.** Mobile deltaic and continental shelf muds as suboxic, fluidized bed reactors. *Mar. Chem.,* 1998, vol. 61, 143-155